# EUROPEAN PATENT APPLICATION

(11) **EP 1 231 774 A2**
(43) Date of publication of application: **14.08.2002**
(21) Application number: 02002638.1
(22) Date of filing: 05.02.2002
(51) Int. Cl.: H04N 1/60

(54) **Printing system**

(30) Priority: 07.02.2001 JP 2001030758
(71) Applicant: Dainippon Screen Mfg. Co., Ltd., Kamikyo-ku, Kyoto (JP)
(72) Inventor: Nishida, Hiroshi, c/oDainippon Screen MFG Co., Ltd, Horikawa-dori, Kamikyo-ku, Kyoto (JP)
(74) Representative: Kilian, Helmut, Dr.

(57) **Abstract**

A server in a printing system acquires color space information for each of a plurality of printing units, generates color conversion information according to the color space information to standardize color representations for the printing units, and transmits print data with the color conversion information attached, to each of the printing units. This allows the printing units to produce printed materials of the same color representation even if they are of different types and operated under different printing conditions. This eliminates the need to do color proofing in the individual printing units, thereby improving efficiency in production of printed materials.

## Description

### BACKGROUND OF THE INVENTION

### Field of the Invention

The present invention relates to a technique for causing a plurality of printing presses to do printing in the same color representation.

### Description of the Background Art

Recent developments in printing techniques using digital data have considerably changed preferred forms of printing.

For example, printed materials such as magazines were conventionally and often printed at one place and then distributed in printed form to local offices. Use of digital data that is easy to distribute, however, allows each local office to produce printed materials based on distributed digital data, thereby bringing the advantage of avoiding the necessity of transporting heavy printed materials.

In the case of publishing an advertisement in a plurality of newspapers, without the need for preparing complete mechanicals for every newspaper, only one digital data for printing the advertisement should be generated and distributed to each newspaper publisher. This eliminates the need to generate a plurality of complete mechanicals, thereby improving efficiency in the printing process.

But if local offices do printing using distributed digital data, resultant printed materials may often come in various color representations because of different printing conditions. This problem is caused by the facts that the types of printing presses used for printing may vary from local office to local office and that even if the same type of printing presses are used, they may be operated under different printing conditions.

Also in the case of distributing digital data for printing an advertisement to each newspaper publisher, the same problem as above described arises when printing the advertisement, because the respective newspaper publishers may use different types of printing presses under different printing conditions.

To prevent the occurrence of such a problem about color representation, it has been possible to employ avoidance techniques such as doing proofreading for correction of color representation before printing.

However, printing by the distribution of digital data, unlike conventional printing, requires color proofing at each local office or newspaper publisher and also requires a distributor to generate a galley proof for color proofing for every local office or newspaper publisher. This offers a new drawback of making more trouble in the proofreading process.

For that reason, a color conversion technique called "color matching" has been recently introduced to bring a color representation for each printing press in coincidence with that for digital data. Color matching uses a "profile" that stores properties of each printing press, for color conversion of digital data, thereby to match color representations for printing presses and digital data. This brings the advantage of saving trouble in color proofing. The details of the color matching technique is disclosed, for example, in U.S. Pat. No. 4,500,919.

However, generating color-matched digital data for every local office and newspaper publisher produced a new problem for a distributor of digital data, i.e., brought more trouble in process. Specifically, for distributing digital data after color conversion by means of color matching, the distributor must carry out the color conversion of digital data for each local office and newspaper publisher because the respective local offices and newspaper publishers may use different types of printing presses. This causes the distributor to have much trouble in color conversion of digital data, thereby preventing an increase in efficiency in the printing process.

### SUMMARY OF THE INVENTION

The present invention is directed to a technique for causing a plurality of printing units to do printing in the same color representation.

According to the present invention, a printing system comprises: a) a plurality of printing units; and b) a server. The server comprises a color space information acquisition element for acquiring a plurality of pieces of color space information each corresponding to one of the plurality of printing units; a color conversion information generation element for generating a plurality of pieces of color conversion information, each corresponding to one of the plurality of printing elements, on the basis of the plurality of pieces of color space information; an attaching element for attaching each of the plurality of pieces of color conversion information to print data to obtain a plurality of pieces of print information; and a transmission element for transmitting each of the plurality of pieces of print information to a corresponding one of the plurality of printing units, whereby the plurality of printing units can generate printed materials in substantially the same color representation.

According to one aspect of the present invention, the plurality of printing units and the server are connected through a network, over which the plurality of pieces of color space information and the plurality of pieces of print information are transmitted.

Preferably, the transmission element transmits the plurality of pieces of print information by one operation to the plurality of printing units.

Preferably, the plurality of printing units each have inherent information for use in identifying the printing units. According to the inherent information, the transmission element determines one printing unit to which each of the plurality of pieces of print information is transmitted.

Therefore, an object of the present invention is to provide a printing system capable of causing a plurality of printing units to do printing in the same color representation while improving efficiency in the printing process.

These and other objects, features, aspects and advantages of the present invention will become more apparent from the following detailed description of the present invention when taken in conjunction with the accompanying drawings.

### BRIEF DESCRIPTION OF THE DRAWINGS

Fig. 1 is an explanatory diagram of a printing system according to a preferred embodiment of the present invention;
Fig. 2 shows a configuration of a server;
Fig. 3 is a flow chart for explaining the operation of the printing system and especially of the server;
Fig. 4 shows an example of the structure of color space information;
Fig. 5 shows the relationship between color conversion information and a plurality of printing units;
Fig. 6 shows an example of the structure of print data with color conversion information attached, corresponding to one of the plurality of printing units; and
Fig. 7 shows an example of a script that stores print data with an identification tag that gives inherent information on each of the plurality of printing units.

### DESCRIPTION OF THE PREFERRED EMBODIMENTS

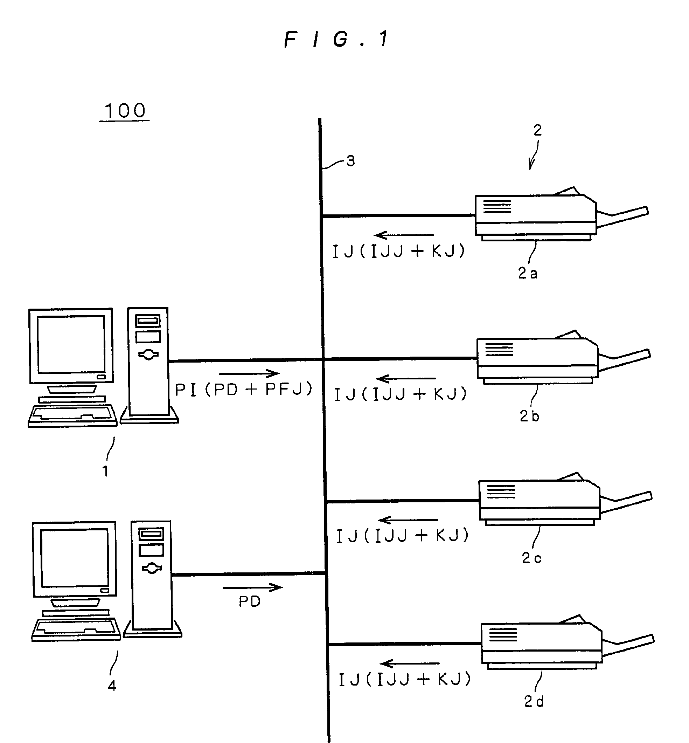

Fig. 1 is an explanatory diagram of a printing system 100 according to a preferred embodiment of the present invention. The printing system 100 comprises a server 1, a plurality of printing units 2, and an image processing terminal 4, all of which are interconnected through a network 3.

The image processing terminal 4 generates digital print data PD for use in printing in the plurality of printing units 2. The image processing terminal 4 includes a layout section not shown. The layout section is a commonly-used DTP application that lays out images, line drawings, text, and the like for a layout area, thereby to generate print data PD described by a page description language which is typified by PostScript (registered trademark by Adobe Systems, Inc.). Of course, the format of the print data PD is not limited to the one described by the page description language. The generated print data PD is transmitted to the server 1 over the network 3.

The server 1 transmits, over the network 3, a plurality of pieces of print information PI for use in printing in the plurality of printing units 2. The server 1 also receives a plurality of pieces of color space information IJ each corresponding to one of the plurality of printing units 2 and generates a plurality of pieces of color conversion information PFJ, each corresponding to one of the plurality of printing units 2, for use in standardizing color representations of printed materials generated by the printing units 2. As previously described, the printing units 2 each have a different color space. That is, the printing units 2 are different types of printing presses located under different circumstances. Thus, even if the printing units 2 do printing based on the same print data, color representations of printed images described by the print data vary from printing unit to printing unit. The server 1, therefore, generates the plurality of pieces of color conversion information PFJ for use in standardizing the color representations for the printing units 2, on the basis of the plurality of pieces of color space information IJ each corresponding to one of the printing units 2.

Here, the color space information IJ is a data set that represents the properties of each printing unit 2, and more specifically, it is a description of color spectral characteristics of printed materials generated by the printing unit 2. The color conversion information PFJ is a kind of lookup table in format and is generated based on corresponding color space information IJ. When the printing units 2 having different color spaces do printing using the same print data PD, they use their respective color conversion information PFJ. That is, each of the printing units 2 uses its own color conversion information PFJ for color conversion of the print data PD, thereby to obtain adapted print data. This allows the printing units 2 to produce printed materials of the same color representation based on the same print data PD. The server 1 attaches the color conversion information PFJ corresponding to each of the printing units 2 to the print data PD thereby to generate a plurality of pieces of print information PI, and transmits each print information PI to a corresponding one of the printing units 2.

The details of the color conversion using the color conversion information is disclosed, for example, in U.S. Pat. No. 4,500,919.

The printing units 2 each comprise a RIP section and a print operating section (both not shown). Upon receipt of the print information PI from the server 1, the printing units 2 rasterize the print data PD included in the print information PI at the RIP section and print the rasterized print data RPD at the print operating section, whereby the contents of the print data PD is printed on the printing paper. Further for printing printed materials of the same color representation, the printing units 2 transmit their respective color space information IJ to the server 1. As has been described that the printing units 2 rasterize the print data PD with the color conversion information PFJ attached, the color conversion information PFJ here is information generated based on the corresponding color space information U and for use in standardizing color representations. According to the color conversion information PFJ, each of the printing units 2 performs color conversion on the print data PD, thereby to obtain adapted print data. The printing units 2 then do printing based on the adapted print data. This allows the plurality of printing units 2 to produce printed materials of the same color representation.

In the present example, a plurality of printing units 2a, 2b, 2c, and 2d are connected to the server 1 through the network 3 and they have inherent information KJ of "a", "b", "c", and "d", respectively. This inherent information KJ is for use in identifying each of the printing units 2 and includes, for example, mail addresses, MAC addresses, or IP addresses.

The network 3 is a network typified for example by the Internet or the public telephone network, or it is a network using a leased line such as LAN or WAN. The network 3 is a two-way circuit and can transmit data between the server 1 and the plurality of printing units 2.

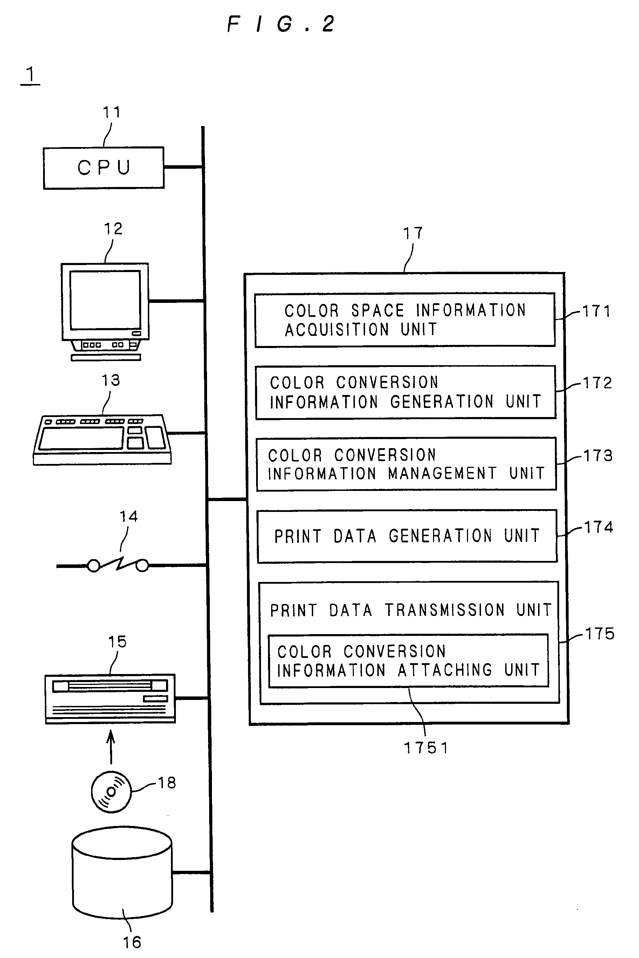

Fig. 2 shows a configuration of the server 1. The server 1 is a commonly-used personal computer and comprises a CPU 11, a display unit 12, an input unit 13, a network I/F 14, a media drive 15, a storage unit 16, and a memory 17. The CPU 11 controls the entire server 1 and especially implements the function of the server 1 by executing, on the memory 17, a program recorded on a media disk 18 inserted in the media drive 15. The display unit 12 displays information necessary for the operation of the server 1. The input unit 13 is configured of a mouse, a keyboard, and the like and is used by an operator to input instructions to the server 1. The network I/F 14 establishes connection between the server 1 and the network 3. Through the network I/F 14, the server 1 transmits the print information PI including the print data PD with the color conversion information PFJ attached, to the printing units 2 connected to the network 3. The server 1 also receives the color space information IJ from each of the printing units 2 or the print data PD from the image processing terminal 4. Alternatively, a program for implementing the function of the server 1 may be downloaded from a server not shown. The media drive 15 is used to read a program recorded on the media disk 18. The function of the server 1 is implemented with the program read by the media drive 15. When the server 1 and the printing units 2 are operated off-line, subsequent processing may be performed by recording the print information PI including the print data PD and the color conversion information PFJ on the media disk 18 or, conversely, by reading the media disk 18 which records the color space information U for the printing units 2. The storage unit 16 stores a program read by the media drive 15. The storage unit 16 also stores the color space information IJ, the color conversion information PFJ, and the print data PD.

The memory 17 is a work area for the CPU 11 to execute a program stored in the storage unit 16. The program execution by the CPU 11 implements the functions of a color space information acquisition unit 171, a color conversion information generation unit 172, a color conversion information management unit 173, and a print data transmission unit 174.

The color space information acquisition unit 171 receives a plurality of pieces of color space information U each transmitted from one of the printing units 2. The transmission of the color space information U from the printing units 2 to the color space information acquisition unit 171 is performed over the network 3. The color space information IJ transmitted from each of the printing units 2 includes substantial color space information IJJ and inherent information KJ for use in identifying one printing unit 2 that has a color space corresponding to the substantial color space information IJJ. The color space information acquisition unit 171 stores the obtained color space information U in the storage unit 16.

The color conversion information generation unit 172 generates a plurality of pieces of color conversion information PFJ for use in achieving the same color representation for the plurality of printing units 2, on the basis of the substantial color space information IJJ in the color space information IJ obtained by the color space information acquisition unit 171. The color conversion information generation unit 172 stores the generated color conversion information PFJ in the storage unit 16.

The color conversion information management unit 173 manages the color conversion information PFJ generated for each of the printing units 2. As previously described, the color space information U includes the substantial color space information IJJ and the inherent information KJ for use in identifying one printing unit 2 which has a corresponding color space. By associating the color conversion information PFJ generated from the substantial color space information IJJ with the inherent information KJ, the color conversion information management unit 173 can manage the color conversion information PFJ corresponding to each one of the printing units 2. The color conversion information management unit 173 also has the function of reading out the color conversion information PFJ to be attached when transmitting the print data PD, from the storage unit 16 (which will be described later).

The print data transmission unit 174 transmits the print information PI to the plurality of printing units 2 over the network 3. This allows the printing units 2 to do printing with the print data PD included in the print information PI. Where to transit the print information PI can be determined according to the inherent information KJ included in the color space information IJ obtained by the color space information acquisition unit 171.

The print data transmission unit 174 further comprises a color conversion information attaching unit 1741 which attaches the color conversion information PFJ to the print data PD to generate the print information PI. That is, the color conversion information management unit 173 reads out the color conversion information PFJ associated with the inherent information KJ on each of the printing units 2 and the color conversion information attaching unit 1741 attaches the color conversion information PFJ to the print data PD, whereby the print information PI is obtained. The print data transmission unit 174 can transmit the print information PI to the plurality of printing units 2 according to the inherent information KJ corresponding to the color conversion information PFJ in the print information PI.

The print data transmission unit 174 can employ various forms of transmission of the print information PI. While it is possible to transmit the print information PI including the same print data PD in sequence to each of the printing units 2, it is more efficient to transmit the print information PI by one operation to the plurality of printing units 2. The technique for transmitting the print information PI by one operation includes a technique for broadcasting information according to the inherent information KJ on each of the printing units 2, and a technique for describing and transmitting a script that stores the print information PI with an identification tag that gives the inherent information KJ on each of the printing units 2.

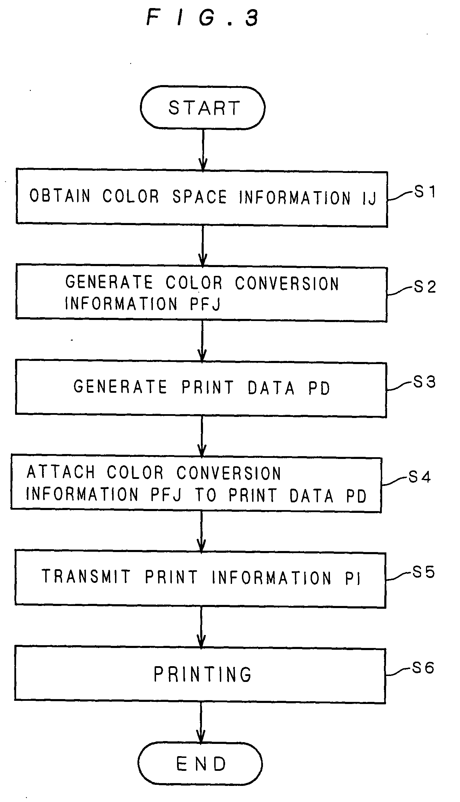

Fig. 3 is a flow chart for explaining the operation of the printing system 100 and especially of the server 1.

In step S1, the server 1 acquires the color space information IJ. In each of the printing units 2 in the printing system 100, an operator measures the substantial color space information IJJ for use in the print operating section. The technique for measuring the substantial color space information IJJ includes a technique for measuring color patches attached to printed materials produced by the print operating section, thereby to obtain substantial color space information IJJ on each of YMCK colors.

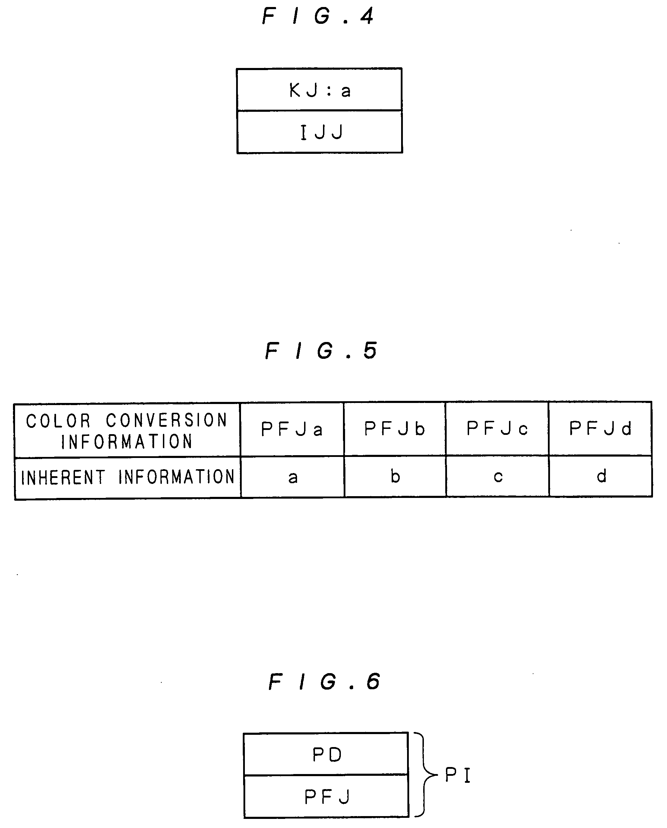

The substantial color space information IJJ generated is transmitted to the server 1 under the control of the operator. Transmitted at this time is the color space information IJ including the substantial color space information IJJ and the inherent information KJ on each of the printing unit 2. The server 1 receives the color space information IJ transmitted from each of the printing units 2 at the color space information acquisition unit 171. Then, the received color space information IJ is stored in the storage unit 16 by the color space information acquisition unit 171. Fig. 4 shows an example of the structure of the color space information IJ.

In step S2, based on the color space information U obtained in step S1, the color conversion information generation unit 172 generates the color conversion information PFJ. The color conversion information generation unit 172 generates the color conversion information PFJ on each of the printing units 2, on the basis of the substantial color space information IJJ in the color space information IJ obtained in step S1.

The color conversion information PFJ generated in step S2 is associated with each of the printing units 2 as shown in Fig. 5 and stored in the storage unit 16, under the control of the color conversion information management unit 173.

In step S3, the operator of the image processing terminal 4 operates the layout section, not shown, to generate the print data PD. The layout section is a commonly-used DTP application that lays out images, line drawings, text, and the like for an layout area to generate the print data PD described by the page description language. Of course, the format of the print data PD is not limited to the one described by the page description language. The generated print data PD is transmitted to the server 1 and stored in the storage unit 16.

In step S4, the color conversion information attaching unit 1741 attaches the color conversion information PFJ read out by the color conversion information management unit 173 to the print data PD, thereby to obtain the print information PI. The attachment of the color conversion information PFJ to the print data PD can be achieved by a technique for integrating the color conversion information PFJ into the print data PD, besides a technique for linking the color conversion information PFJ to the print data PD to establish an association therebetween. Since the color conversion information PFJ is generated in a one-to-one correspondence with the printing units 2, the print information PI which is a combination of the color conversion information PFJ and the print data PD also have a one-to-one correspondence with the printing units 2. Fig. 6 shows an example of the structure of the print information PI with the color conversion information attached to the print data PD.

In step S5, the print data transmission unit 174 transmits each of the pieces of print information PI to a corresponding one of the printing units 2 according to the inherent information KJ corresponding to the color conversion information PFJ attached to the print data PD.

When the print data transmission unit 174 transmits the print information PI, it is more efficient to transmit the print information PI by one operation to each of the printing units 2 than to transmit the print information PI in sequence to each of the printing units 2. As a technique for transmitting the print information PI by one operation, the print data transmission unit 174 uses a technique for broadcasting information according to the inherent information KJ on each of the printing units 2 or a technique for describing and transmitting a script that stores the print data PD with an identification tag that gives the inherent information KJ on each of the printing units 2.

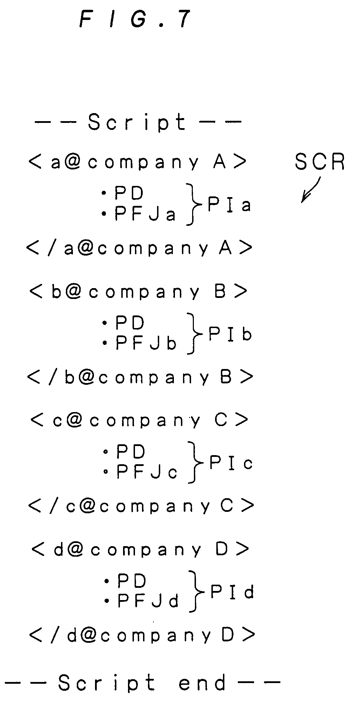

Fig. 7 shows an example of such a script that stores the print information PI with an identification tag that gives the inherent information KJ on each of the printing units 2. The script SCR shown in Fig. 7 includes the inherent information KJ on each of the printing units 2a, 2b, 2c, and 2d as an identification tag. More specifically, on the basis of the inherent information KJ, identification tags written in such a format as <inherent information KJ> and </inherent information KJ> are described in the script SCR. In the script SCR, the print data PD and the color conversion information PFJ corresponding to each of the printing units 2 are described in such a manner as to be sandwiched between the identification tags. For example, where the company "A" has the inherent information KJ that gives an IP address, "a@company A", print data PD and color conversion information PFJa to be transmitted to a printing unit located in the company "A" are described between a pair of identification tags <a@company A> and </a@company A> as print information PIa. Similarly, print information PIb includes print data PD and color conversion information PFJb to be transmitted to a printing unit located in the company "B". Print information PIc and print information PId are pieces of information to be transmitted respectively to printing units located in the companies "C" and "D".

The print data transmission unit 174 generates such a script SCR and transmits it to the plurality of printing units 2 over the network 3. By identifying the print data PD and the color conversion information PFJ which are described between a pair of identification tags corresponding to the inherent information KJ on each of the printing units 2, the printing units 2 can receive the print data PD with the color conversion information PFJ attached as the print information PI.

In step S6, the printing units 2 each rasterize the print data PD in the received print information PI at the RIP section not shown and print the rasterized print data RPD on the printing paper at the print operating section not shown. At this time, the printing units 2 each perform color conversion according to the color conversion information PFJ attached to the print data PD, so that print images described by the print data PD have the same color representation. The color conversion based on the color conversion information PFJ may be performed either at the time of rasterization in the RIP section or at the time of printing in the print operating section. This allows the plurality of printing units 2 to generate printed materials of the same color representation.

With the server 1 in the printing system 100 of Fig. 1 operating as shown in the flowchart of Fig. 3, the plurality of printing units 2 can produce printed materials of the same color representation even if they are of different types and operated under different printing conditions. This removes the conventional drawbacks and eliminates the need to perform color proofing in the individual printing units 2, thereby improving efficiency in the production of printing materials.

### <Modification>

The functions of the color space information acquisition unit 171 and the color conversion information generation unit 172 may be achieved by the image processing terminal 4, instead of the server 1.

This lessens the burden of the server 1 and improves efficiency in the printing process in the printing system 100.

The color conversion information PFJ which is managed by the color conversion information management unit 173 in the server 1 may be generated based on the substantial color space information IJJ on printed materials generated by the printing units 2.

This allows the printing units 2 to produce printed materials of a desired color representation.

Further, once the print information PI including the print data PD and the color conversion information PFJ has been transmitted to the printing units 2, the server 1 may omit the transmission of the color conversion information PFJ at the time of subsequent transmission of print data PD, in which case the printing units 2 do printing using the previously transmitted color conversion information PFJ.

This reduces the amount of data to be transmitted and traffic over the network 3, thereby improving efficiently in the printing process.

While the invention has been shown and described in detail, the foregoing description is in all aspects illustrative and not restrictive. It is therefore understood that numerous modifications and variations can be devised without departing from the scope of the invention.

## Claims

1. A printing system comprises:
a) a plurality of printing units; and
b) a server,
said server comprising:
a color space information acquisition element for acquiring a plurality of pieces of color space information each corresponding to one of said plurality of printing units;
a color conversion information generation element for generating a plurality of pieces of color conversion information, each corresponding to one of said plurality of printing units, on the basis of said plurality of pieces of color space information;
an attaching element for attaching each of said plurality of pieces of color conversion information to print data to obtain a plurality of pieces of print information; and
a transmission element for transmitting each of said plurality of pieces of print information to a corresponding one of said plurality of printing units,
whereby said plurality of printing units generate printed materials of substantially the same color representation.

2. The printing system according to claim 1, wherein
said plurality of printing units and said server are connected through a network, and
said plurality of pieces of color space information and said plurality of pieces of print information are transmitted over said network.

3. The printing system according to claim 2, wherein
said transmission element transmits said plurality of pieces of printing information by one operation to said plurality of printing units.

4. The printing system according to claim 3, wherein
said plurality of printing units each have inherent information for use in identifying said plurality of printing units, and
said transmission element determines one printing unit to which each of said plurality of pieces of print information is transmitted, according to said inherent information.

5. A server comprising:
a color space information acquisition element for acquiring a plurality of pieces of color space information each corresponding to one of a plurality of printing units;
a color conversion information generation element for generating a plurality of pieces of color conversion information, each corresponding to one of said plurality of printing elements, on the basis of said plurality of pieces of color space information;
an attaching element for attaching each of said plurality of pieces of color conversion information to print data to obtain a plurality of pieces of print information; and
a transmission element for transmitting each of said plurality of pieces of print information to a corresponding one of said plurality of printing units.

6. A method of causing a plurality of printing units to do printing, comprising the steps of:
acquiring a plurality of pieces of color space information each corresponding to one of said plurality of printing units;
generating a plurality of pieces of color conversion information, each corresponding to one of said plurality of printing units, on the basis of said plurality of pieces of color space information;
attaching each of said plurality of pieces of color conversion information to print data to obtain a plurality of pieces of print information; and
transmitting each of said plurality of pieces of print information to a corresponding one of said plurality of printing units,
whereby said plurality of printing units generate printed materials of substantially the same color representation.

7. A recording medium for recording a program that can be installed in a computer, said computer executing said program so as to act as a server,
said server comprising:
a color space information acquisition element for acquiring a plurality of pieces of color space information each corresponding to one of a plurality of printing units;
a color conversion information generation element for generating a plurality of pieces of color conversion information, each corresponding to said plurality of printing units, on the basis of said plurality of pieces of color space information;
an attaching element for attaching each of said plurality of pieces of color conversion information to print data to obtain a plurality of pieces of print information; and
a transmission element for transmitting each of said plurality of pieces of print information to a corresponding one of said plurality of printing units.

8. A program capable of being installed in a computer,
said computer executing said program so as to act as a server,
said server comprising:
a color space information acquisition element for acquiring a plurality of pieces of color space information each corresponding to one of a plurality of printing units;
a color conversion information generation element for generating a plurality of pieces of color conversion information, each corresponding to one of said plurality of printing units, on the basis of said plurality of pieces of color space information;
an attaching element for attaching each of said plurality of pieces of color conversion information to print data to obtain a plurality of pieces of print information; and
a transmission element for transmitting each of said plurality of pieces of print information to a corresponding one of said plurality of printing units.
